# EUROPEAN PATENT APPLICATION

(11) **EP 3 687 032 A1**
(43) Date of publication of application: **29.07.2020**
(21) Application number: 19153056.7
(22) Date of filing: 22.01.2019
(51) Int. Cl.: H02J 50/10, H02J 50/80

(54) **A WIRELESS POWER TRANSFER DEVICE AND METHOD THEREFOR**

(71) Applicant: Koninklijke Philips N.V., 5656 AG Eindhoven (NL)
(72) Inventor: Geurts, Lucas Jacobus Franciscus, 5656 AE Eindhoven (NL); Buil, Vincentius Paulus, 5656 AE Eindhoven (NL); Latul, Julien Philippe, 5656 AE Eindhoven (NL); Talgorn, Elise Claude Valentine, 5656 AE Eindhoven (NL); De Klein, Nicole Louisa, 5656 AE Eindhoven (NL); Allende, Paula Andrea, 5656 AE Eindhoven (NL)
(74) Representative: de Haan, Poul Erik

(57) **Abstract**

A wireless power transfer system supports wireless power transfer from a power transmitter (101) to a power receiver (105) using an electromagnetic power transfer signal. A power transfer device which is either the power transmitter (101) or the power receiver (105) comprises a power transfer circuit (201) which includes a power transfer coil (103, 107) for receiving or generating the power transfer signal during power transfer. A detector (203) is arranged to detect a change in a power transfer state for the power transfer. A generator (205) generates an event trigger message in response to the detection of the change in the power transfer state and a transmitter (207) transmits the event trigger message to a destination device via a network. The approach may allow a wireless power transfer system to be used to trigger external events.

## Description

### FIELD OF THE INVENTION

The invention relates to a wireless power transfer device and a method therefor, and in particular, but not exclusively, to a wireless power transfer device for a Qi type wireless power transfer system.

### BACKGROUND OF THE INVENTION

Most present-day electrical products require a dedicated electrical contact in order to be powered from an external power supply. However, this tends to be impractical and requires the user to physically insert connectors or otherwise establish a physical electrical contact. Typically, power requirements also differ significantly, and currently most devices are provided with their own dedicated power supply resulting in a typical user having a large number of different power supplies with each power supply being dedicated to a specific device. Although, the use of internal batteries may avoid the need for a wired connection to a power supply during use, this only provides a partial solution as the batteries will need recharging (or replacing). The use of batteries may also add substantially to the weight and potentially cost and size of the devices.

In order to provide a significantly improved user experience, it has been proposed to use a wireless power supply wherein power is inductively transferred from a transmitter inductor in a power transmitter device to a receiver coil in the individual devices.

Power transmission via magnetic induction is a well-known concept, mostly applied in transformers having a tight coupling between a primary transmitter inductor/coil and a secondary receiver coil. By separating the primary transmitter coil and the secondary receiver coil between two devices, wireless power transfer between these becomes possible based on the principle of a loosely coupled transformer.

Such an arrangement allows a wireless power transfer to the device without requiring any wires or physical electrical connections to be made. Indeed, it may simply allow a device to be placed adjacent to, or on top of, the transmitter coil in order to be recharged or powered externally. For example, power transmitter devices may be arranged with a horizontal surface on which a device can simply be placed in order to be powered.

Furthermore, such wireless power transfer arrangements may advantageously be designed such that the power transmitter device can be used with a range of power receiver devices. In particular, a wireless power transfer approach, known as the Qi Specifications, has been defined and is currently being developed further. This approach allows power transmitter devices that meet the Qi Specifications to be used with power receiver devices that also meet the Qi Specifications without these having to be from the same manufacturer or having to be dedicated to each other. The Qi standard further includes some functionality for allowing the operation to be adapted to the specific power receiver device (e.g. dependent on the specific power drain).

The Qi Specification is developed by the Wireless Power Consortium and more information can e.g. be found on their website:
http://www.wirelesspowerconsortium.com/index.html, where in particular the defined Specification documents can be found.

Wireless power transfer systems, such as Qi power transfer systems, may provide a range of functions and services that may effectively support power transfer to a range of devices in a range of applications. However, there is a desire to further enhance the systems to provide additional or improved functions and services, and in particular to provide additional functions and services that may enhance the user experience.

Hence, an improved power transfer approach would be advantageous, and in particular, an approach allowing increased flexibility, reduced cost, reduced complexity, enhanced user experience, additional or improved functions or services, and/or improved performance would be advantageous.

### SUMMARY OF THE INVENTION

Accordingly, the Invention seeks to preferably mitigate, alleviate or eliminate one or more of the above mentioned disadvantages singly or in any combination.

According to an aspect of the invention there is provided a power transfer device for wireless power transfer from a power transmitter to a power receiver using an electromagnetic power transfer signal, the power transfer device being one of the power transmitter and the power receiver, the power transfer device comprising: a power transfer circuit comprising a power transfer coil for receiving or generating the power transfer signal during power transfer; a detector for detecting a change in a power transfer state for the power transfer; a generator for generating an event trigger message in response to the detection of the change in the power transfer state; and a transmitter for transmitting the event trigger message to a destination device via a network.

The invention may provide an improved user experience in many embodiments and scenarios, and may provide additional functionality and/or services for a wireless power transfer system. In many embodiments and scenarios, it may provide a very intuitive and advantageous means for controlling and initiating many different and varied processes and events, including processes and events that are not directly related to the power transfer operation itself.

The approach may allow additional functionality while maintaining low complexity and low resource usage. In many embodiments, the additional functionality may be provided without requiring any additional hardware and with only a low computational resource overhead.

The approach may in many scenarios provide an accurate and practical means for e.g. controlling an external process or operation.

The destination device may be any entity or node that can be reached (at least partly) via the network. The network may be a local and/or private network, or may e.g. include a public network, such as specifically the Internet. The destination device may specifically be a remote/ external/ network device, and may e.g. correspond to any node of the network. The network may be a home network. In some embodiments, the network does not include the Internet, or possibly in some embodiments any public network.

The event trigger message may be a(ny) message comprising or representing a request to trigger an event.

In accordance with an optional feature of the invention, the power transfer device further comprises: a communicator for communicating with a complementary power transfer device being the other device of the power receiver and the power transmitter, and the communicator is arranged to receive an identity from the complementary power transfer device and the generator is arranged to generate the event trigger message to comprise an indication of the identity of the complementary power transfer device.

This may provide improved performance in many embodiments and may provide additional and/or improved functionality for many scenarios. The identity may be a unique identity of the complementary power transfer device or may be a type or group identity common for a plurality of power transfer devices. The identity may be a permanent identity of the complementary power transfer device or may e.g. be a dynamically assignable identity.

In accordance with an optional feature of the invention, the power transfer device further comprises: a communicator for communicating with a complementary power transfer device being the other device of the power receiver and the power transmitter, and the communicator is arranged to receive an identity of the complementary power transfer device and the generator is arranged to select the destination device in response to the identity of the complementary power transfer device.

This may provide improved performance in many embodiments and may provide additional and/or improved functionality for many scenarios. The selection of the destination device may e.g. be by selecting the destination device from a plurality of candidate destination device or may e.g. be by determining an identity or address for the event trigger message corresponding to the destination device. The generator is arranged to select the destination device as a destination for the event trigger message in response to the identity of the complementary power transfer device.

In accordance with an optional feature of the invention, the generator is arranged to select the destination device in response to a characteristic of the change in the power transfer state.

This may provide improved performance in many embodiments and may provide additional and/or improved functionality for many scenarios. The selection of the destination device may e.g. be by selecting the destination device from a plurality of candidate destination device or may e.g. be by determining an identity or address for the event trigger message corresponding to the destination device. The generator is arranged to select the destination device as a destination for the event trigger message in response to the identity of the complementary power transfer device.

In accordance with an optional feature of the invention, the power transfer device further comprises: a communicator for communicating with a complementary power transfer device being the other device of the power receiver and the power transmitter, and the communicator is arranged to receive data from the complementary device and to determine a property of the event trigger message in response to the control data.

This may provide improved performance in many embodiments and may provide additional and/or improved functionality for many scenarios. It may in particular allow an efficient approach for adaptation of the operation resulting from the event trigger message.

The data may be control data, and specifically control data for the power transfer. The control data may e.g. represent data controlling the power transfer, such as e.g. information necessary to safely regulate the power transfer between the power transmitter and the power receiver.

In accordance with an optional feature of the invention, the power transfer device further comprises: a communicator for communicating with a complementary power transfer device being the other device of the power receiver and the power transmitter, and the communicator is arranged to receive control data from the complementary device and to include the control data in the event trigger message.

This may provide improved performance in many embodiments and may provide additional and/or improved functionality for many scenarios. It may in particular allow an efficient approach for adaptation of the operation resulting from the event trigger message.

In accordance with an optional feature of the invention, the control data includes data unrelated to the power transfer.

The Invention may provide additional functionality wherein a wireless power transfer system can be used to control events not directly related to the power transfer, and possibly unrelated to the power transfer devices.

The data unrelated to the power transfer may be data which that not depend on any parameter/ property/ characteristic of the power transfer operation.

In accordance with an optional feature of the invention, the control data includes status data for the complementary power transfer device.

This may provide additional and/or improved functionality in many embodiments.

In accordance with an optional feature of the invention, the change in the power transfer state includes at least one of an initiation and a termination of the power transfer.

This may provide particularly advantageous operation in many embodiments.

In accordance with an optional feature of the invention, the change in the power transfer state includes a change in a power level of the power transfer signal.

This may provide particularly advantageous operation in many embodiments.

In accordance with an optional feature of the invention, the network is a home automation network.

The approach may allow a close interoperation between a wireless power transfer system and a home automation system including providing additional functionality and enhanced or additional user experiences.

In accordance with an optional feature of the invention, the transmitter is arranged to transmit the message to a second complementary power transfer device.

This may provide additional and/or improved functionality in many embodiments.

In accordance with an optional feature of the invention, the power transfer device is the power receiver.

In accordance with an optional feature of the invention, the power transfer device is the power transmitter.

According to an aspect of the invention there is provided a method of operation for a power transfer device for wireless power transfer from a power transmitter to a power receiver using an electromagnetic power transfer signal, the power transfer device being one of the power transmitter and the power receiver, the method comprising: a power transfer circuit of the power transfer device comprising a power transfer coil receiving or generating the power transfer signal during power transfer; detecting a change in a power transfer state for the power transfer; generating an event trigger message in response to the detection of the change in the power transfer state; and transmitting the event trigger message to a destination device via a network.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which
FIG. 1 illustrates an example of elements of a power transfer system in accordance with some embodiments of the invention;
FIG. 2 illustrates an example of elements of a power transfer device in accordance with some embodiments of the invention;
FIG. 3 illustrates an example of elements of a power transmitter in accordance with some embodiments of the invention; and
FIG. 4 illustrates an example of elements of a power receiver in accordance with some embodiments of the invention.

### DETAILED DESCRIPTION OF THE EMBODIMENTS

The following description focuses on embodiments of the invention applicable to a wireless power transfer system utilizing a power transfer approach such as known from the Qi specifications. However, it will be appreciated that the invention is not limited to this application but may be applied to many other wireless power transfer systems.

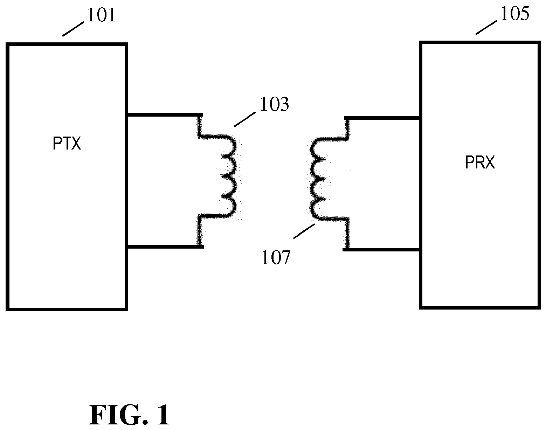

FIG. 1 illustrates an example of a power transfer system in accordance with some embodiments of the invention. The power transfer system comprises a power transmitter 101 which includes (or is coupled to) a transmitter coil / inductor 103. The system further comprises a power receiver 105 which includes (or is coupled to) a receiver coil/ inductor 107.

The system provides a wireless inductive power transfer from the power transmitter 101 to the power receiver 105. Specifically, the power transmitter 101 generates a wireless inductive power transfer signal (also referred to as a power transfer signal or an inductive power transfer signal), which is propagated as a magnetic flux by the transmitter coil or inductor 103. The power transfer signal may typically have a frequency between around 20 kHz to around 500 kHz, and often for Qi compatible systems typically in the range from 95 kHz to 205 kHz (or e.g. for high power kitchen applications, the frequency may e.g. typically be in the range between 20kHz to 80kHz). The transmitter coil 103 and the receiver coil 107 are loosely coupled and thus the receiver coil 107 picks up (at least part of) the power transfer signal from the power transmitter 101. Thus, the power is transferred from the power transmitter 101 to the power receiver 105 via a wireless inductive coupling from the transmitter coil 103 to the receiver coil 107. The term power transfer signal is mainly used to refer to the inductive signal/ magnetic field between the transmitter coil 103 and the receiver coil 107 (the magnetic flux signal), but it will be appreciated that by equivalence it may also be considered and used as a reference to an electrical signal provided to the transmitter coil 103 or picked up by the receiver coil 107.

In the example, the power receiver 105 is specifically a power receiver which receives power via receiver coil 107. However, in other embodiments, the power receiver 105 may comprise a metallic element, such as a metallic heating element, in which case the power transfer signal induces eddy currents resulting in a direct heating of the element.

The system is arranged to transfer substantial power levels, and specifically the power transmitter may support power levels in excess of 500mW, 1W, 5W, 50W, 100W or 500W in many embodiments. For example, for Qi corresponding applications, the power transfers may typically be in the 1-5W power range for low power applications, and in excess of 100 W and up to more than 1000W for high power applications, such as e.g. kitchen applications.

In the following, the operation of the power transmitter 101 and the power receiver 105 will be described with specific reference to an embodiment in accordance with the Qi Specification (except for the herein described (or consequential) modifications and enhancements) or suitable for the higher power kitchen specification being developed by the Wireless Power Consortium. In particular, the power transmitter 101 and the power receiver 105 may follow, or substantially be compatible with, elements of the Qi Specification version 1.0, 1.1 or 1.2 (except for the herein described (or consequential) modifications and enhancements).

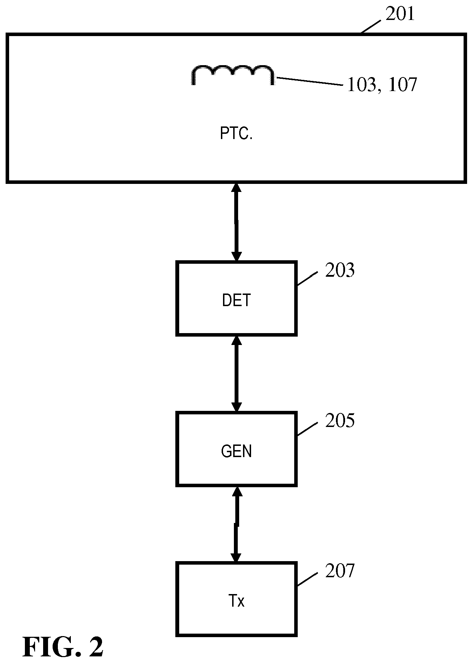

FIG. 2 illustrates an example of a wireless power transfer device for a wireless power transfer from a power transmitter) to a power receiver using an electromagnetic power transfer signal. The wireless power transfer device may specifically be the power transmitter 201 or the power receiver 205 of FIG. 1.

The power transfer device comprises a power transfer circuit 201 including a power transfer coil 103, 107 for receiving or generating the power transfer signal during power transfer. Thus, the power transfer circuit 201 represents the part of the power transfer device (i.e. the power transmitter 201 or power receiver 205) which performs and /or supports power transfer.

The power transfer device further comprises a detector 203 which is coupled to the power transfer circuit 201 and which is arranged to detect a change in a power transfer state for the power transfer.

In many embodiments, the change may be a very substantial change such as the initialization or termination of a power transfer. For example, when the power transfer circuit 201 proceeds to start a new power transfer operation, e.g. following a detection of a complementary power device being present (for a power receiver, a complementary device is a power transmitter; and for a power transmitter, a complementary device is a power receiver), it may as part of the initialization transmit an indication of the power transfer starting up to the detector 203. The detector 203 may detect this indication and accordingly determine that a corresponding change in the power transfer state has occurred. Specifically, it is detected that the power transfer has proceeded from an inactive to an active state.

As another example, when the power transfer circuit 201 proceeds to terminate an ongoing power transfer operation, e.g. following a detection that a complementary power device is no longer present, it may as part of the termination transmit an indication of the power transfer termination to the detector 203. The detector 203 may detect this indication and accordingly determine that a corresponding change in the power transfer state has occurred. Specifically, it is detected that the power transfer has proceeded from an active to an inactive state.

A change in a power transfer state may specifically be a change in power level transmitted from power transmitter to power receiver. This power level typically depends on the presence of a power receiver (mobile device), and the control data packets sent from the power receiver to the power transmitter, indicating the desired power level depending on e.g. battery state of charge.

In terms of states, changes in state can, for example, be formulated as:
(1) initiate power transfer,
(2) change transferred power level from level X to level Y,
(3) terminate power transfer.

The termination of power transfer can e.g. happen due to the power receiver being removed from the power transmitter, or due to e.g. a battery reaching full charge. It is often useful to discriminate between these when generating events. This is possible, because when the battery is full, the transmitter will receive an [End Power Transfer] request from the mobile device. When the device is taken off the charger then the control data communication gets corrupted, which then causes the transmitter to terminate power transfer, as specified in the Qi standard.

In some scenarios, movement of the power receiver relative to the power transmitter may result in a change in the power level of the power transfer signal and it may be desirable for the detector 203 to be able to differentiate between a power level change due to a change in the power transfer conditions and due to a movement of the power receiver. The detector 203 may for example do this by evaluating characteristics of the change in the power level, such as for example the speed at which the power level changes, whether it occurs in response to power control messages from the power receiver etc. In some embodiments, the detector 203 may be arranged to differentiate based on other data and specifically based on sensor data. For example, one or more proximity detectors may be included in the power transmitter allowing this to detect movement of the power receiver. For example, optical proximity sensors may be used.

The detector 203 is coupled to a generator 205 which is arranged to generate an event trigger message in response to the detection of the change in the power transfer state. In some embodiments, the event trigger message may simply be a predetermined message which is the same for all detected events. However, in most embodiments, the event trigger message may depend on one or more properties of the detected event. Further, as described later in more detail, the event trigger message may in many embodiments depend on or include data determined from other parameters and data, including potentially data received from the complementary device.

The event trigger message may comprise (or itself be) a request for an event to be triggered. The event trigger message may in some embodiments specify the event.

The generator 205 is coupled to a network communicator 207 which is arranged to transmit the event trigger message to a remote source via a network, i.e. to a destination device. The transmitter may specifically comprise a network interface which can interface to the network and transmit and receive messages using the network as a communication channel.

The destination device may be any suitable device or node on the network. It may for example be a home automation server, a controller, and alarm center, an Internet service, or e.g. a node of an in-car network, public (transportation) network or workplace/office network etc.

Home automation includes automation of functions for a home, which accordingly is often referred to as a smart home or smart house. A home automation system will typically include control of lighting, climate, entertainment systems, and appliances. It may also include home security such as access control and alarm systems. (see https://en.wikipedia.org/wiki/Home_automation)

The network may be any network including a peer-to-peer network. It may specifically be a Local Area Network (LAN). In many embodiments, the network may be a home network, such as a WiFi network allowing communication between connected devices of e.g. a user's home or office. In many embodiments, the network may include the Internet.

In some embodiments, the network may be a local and/or private network. For such a network there may be restricted access. In other embodiments, the network may be or include a public network, such as specifically the Internet.

The generator 205 may in many embodiments include a network interface capable of transmitting and receiving data packets using the Internet Protocol thereby allowing it to connect to many other devices including e.g. devices of a local network or devices of an external network.

In some embodiments, the network communicator 207 may be arranged to transmit the event trigger message to a predetermined destination, and indeed may always transmit the event trigger message to the same device. In other embodiments, the network communicator 207 may be arranged to select a destination device e.g. based on the specific event or based on another parameter, such as e.g. based on data received from the complementary device.

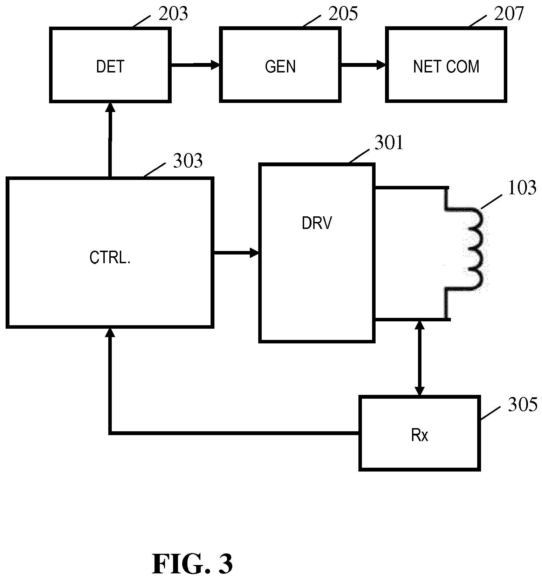

FIG. 3 illustrates an example of elements of power transmitter 101 of FIG. 1 with this including the elements described with reference to FIG. 2, i.e. for the example where the power transfer device of FIG. 2 is the power transmitter 101 of FIG. 1.

The transmitter coil 103 is coupled to a driver 301 which generates a drive signal for the transmitter coil 103. The driver 301 generates the current and voltage signal which is fed to the transmitter inductor 103. The driver 301 is typically a drive circuit in the form of an inverter which generates an alternating signal from a DC Voltage. The output of the driver 301 is typically a switch bridge generating the drive signal by the appropriate switching of switches of the switch bridge.

The driver 301 is coupled to a power transmitter controller 303 which is arranged to control the operation of the power transmitter 101. The power transmitter controller 303 may be arranged to control the operation of the power transmitter 101 to perform the required and desired functions associated with power transfer protocols of the system, and may specifically in the present example be arranged to control the power transmitter 101 to operate in accordance with the Qi Specifications. For example, the power transmitter controller 303 may comprise functionality for detecting a power receiver, for initiation power transfer, for supporting power transfer, for terminating power transfer etc.

In the example, the power transmitter 101 further comprises a power transmitter communicator 305 which is arranged to communicate with the power receiver 105. Specifically, the power transmitter communicator 305 is arranged to receive messages from the power receiver 105 e.g. by decoding load modulation of the power transfer signal as will be known to the skilled person, e.g. from the Qi power transfer specifications. The power transmitter communicator 305 may communicate messages to the power receiver e.g. by modulating the power transfer signal as will be known to the skilled person.

In some embodiments, communication may be performed using a separate communication channel which may be achieved using a separate communication coil, or indeed using the transmitter coil 103. For example, in some embodiments Near Field Communication may be implemented or a high frequency carrier (e.g. with a carrier frequency of 13.56 MHz) may be overlaid on the power transfer signal.

In the example of FIG. 3, the power transmitter 101 further comprises the detector 203, generator 205, and the network communicator 207 described with reference to FIG. 2. Thus, in the example, the detector 203 may detect a change in the power transfer state (e.g. by the power transfer controller 303 indicating that a power transfer operation is being initialized or terminated) causing the generator 205 to generate an event trigger message which by the network communicator 207 is transmitted to a remote destination device. Thus, in the example, the power transmitter 101 may detect a change in the power transfer state and as a result transmit an event trigger message to a remote device.

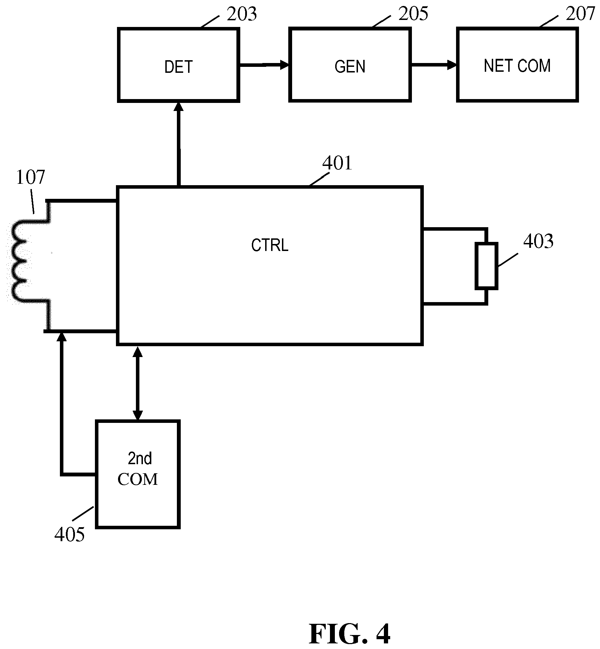

FIG. 4 illustrates an example of elements of the power receiver 205 of FIG. 1 with this including the elements described with reference to FIG. 2, i.e. for the example where the power transfer device of FIG. 2 is the power receiver 105 of FIG. 1.

In the power receiver 205 of FIG. 2, the receiver coil 107 is coupled to a power receiver controller 401 which couples the receiver coil 107 to a load 403. The power receiver controller 401 includes a power control path which converts the power extracted by the receiver coil 107 into a suitable supply for the load 403. In addition, the power receiver controller 401 may include various power receiver controller functionality required to perform power transfer, and in particular functions required to perform power transfer in accordance with the Qi specifications.

In order to support communication from the power receiver 105 to the power transmitter 101 the power receiver 105 comprises a power receiver communicator 405.

The power receiver communicator 405 is arranged to transmit data to the power transmitter by varying the loading of the receiver coil 107 in response to data to be transmitted to the power transmitter 101. The load variations are then detected and demodulated by the power transmitter 101 as will be known to the person skilled in the art.

In the example, the power receiver communicator 405 is furthermore arranged to demodulate amplitude, frequency, and/or phase modulation of the power transfer signal in order to retrieve data transmitted from the power transmitter.

As previously mentioned, in some embodiments, communication in one or both directions may be implemented using a separate communication system, such as e.g. an NFC communication system (or even based Bluetooth or WiFi communication).

In the example of FIG. 4, the power receiver 105 further comprises the detector 203, generator 205, and the network communicator 207 described with reference to FIG. 2. Thus, in the example, the detector 203 may detect a change in the power transfer state (e.g. by the power receiver controller 301 indicating that a power transfer operation is being initialized or terminated) causing the generator 205 to generate an event trigger message which by the network communicator 207 is transmitted to a remote device. Thus, in the example, the power receiver 105 may detect a change in the power transfer state and as a result transmit an event trigger message to a remote destination device.

In the example of FIG. 3 and 4, both the power transmitter 101 and the power receiver 105 comprises functionality for generating and transmitting an event trigger message in response to detecting a change in the power transfer state. It will be appreciated that in many embodiments, both power transfer devices may indeed comprise such functionality and that indeed they may operate independently of each other, e.g. generating different event trigger messages for different destination devices. However, in many embodiments, only one of the power transfer devices will comprise such functionality, i.e. only one of the power transmitter 101 and the power receiver 105 will comprise the detector 203, the generator 205 and the network communicator 207.

The approach may provide additional flexibility and additional operations for a wireless power transfer system. For example, it may allow a wireless power transfer system to operate as a user input to trigger various events, including both events that may be associated with the power transfer as well as events that are not.

The network may for example be a home automation network and the event trigger message may be a home automation event trigger message. The detection of a change in the power transfer state may automatically transmit an event trigger message which can cause a specific home automation event. Home automation may typically control e.g. heating, lights, alarm or security devices, audiovisual content rendering, etc.

As a specific example, the approach may be implemented in a power transmitter being part of a phone cradle for holding and charging a mobile phone. In such an example, a user returning to his home may simply position his phone in the cradle. The power transmitter may then detect that a power transfer operation is initialized to charge the phone and in response it may transmit a home automation event trigger message to a home automation server or controller. The reception of this event trigger message may cause the home automation server to execute a routine or scene to cause a predetermined set of home automation operations, including e.g. lights or alarms. For example, when a user returns to his home at the end of a working day, merely positioning his phone in the charging cradle may result in e.g. the lights automatically coming on in accordance with a predefined setting or scene, the alarm automatically switching off, music starting to play, and the water heating switching on.

In some embodiments, the event trigger message may be sent to a remote server, such as e.g. an Internet service or other remote server. As a specific example, the event trigger message may be message transmitted to a service such as the IFTTT (If This Then That) which may then proceed to perform a given task defined for the event trigger message. This may for example allow the operation of the power transfer to result in e.g. emails being sent, websites being updated, twitter messages being generated etc.

It will be appreciated that the change in power transfer state which is detected and causes the event trigger message to be transmitted may be different in different embodiments. Indeed, in many embodiments, the detector 203 may be arranged to detect different changes in the power transfer state and different event trigger messages may be generated and transmitted depending on the specific change detected.

In particular, as mentioned previously, in many embodiments, the detector 203 may be arranged to detect an initiation and/or a termination of the power transfer. This may for example allow the control of remote activities to be triggered by actions involving the coupling of a power transmitter and a power receiver, and may in many scenarios provide a particularly advantageous user experience.

For example, a bedside table may include a power transmitter in accordance with FIG. 3. When a power receiver is positioned on the bedside table such that charging initiates, an event trigger message may for example be sent to cause the lights in all other rooms being switched off, heating being turned down, initiation of an alarm sensor in another room, a text message indicating that the user has gone to bed being sent to a specific destination etc. When the power transmitter detects that the power receiver is removed, and the power transfer terminates, one or more event trigger messages may be generated and transmitted to e.g. trigger lights being switched on elsewhere in the house, the alarm being switched off, heating being turned on, and a text message being transmitted indicating that the user is awake etc.

It will be appreciated that in comparison to e.g. mere proximity detection, the event trigger message being based on detecting a chance in the power transfer state not only provides additional options and possibilities but may also provide improved reliability in many embodiments. For example, the lights will not be switched off and alarm on merely by an item being positioned on the bedside table (such as e.g. a book or a metal object) but requires this to be an actual power receiver that qualifies for power transfer. E.g. the approach can differentiate between a book or keys and a mobile phone being positioned on the bedside table.

In many embodiments, the approach may also be arranged to detect changes in the power transfer state during an ongoing power transfer. Specifically, the detector 203 may be arranged to detect a change in a power level of the power transfer signal.

The detector 203 may specifically detect that a power level averaged over a given time, or low pass filtered with a suitable low pass filter, has changed by more than a given value/ threshold. For example, the power level over a time interval of no less than 1,2,5 or 10 seconds may be continuously evaluated or the output of the power level after a low pass filtering with a 3dB cut-off frequency no higher than 1, 1/2, 1,5, or 1/10 Hz may be evaluated. If this averaged/ low pass filtered power level changes by more than a given amount, or e.g. increases above or decreases below a threshold, a detection of a change in power transfer state may be considered to have occurred.

Such an approach may for example allow other events to be triggered automatically when the user e.g. changes the function of the device being powered by the power transmitter. For example, if a user switches a wirelessly powered motor from a low setting to a high setting, the increased power being drawn from the power transfer signal may be detected resulting in an event trigger message being generated and transmitted.

As another example, if the power receiver is a battery charger, the corresponding power transmitter may e.g. detect a substantial reduction in the power level resulting from the battery charger switching from a fast charging state to a trickle charge state. A corresponding event trigger message can be generated and e.g. transmitted to the user's mobile phone which in response can show an alert indicating that charging has completed.

In some embodiments, the event trigger message may always be transmitted to the same destination. For example, the network communicator 207 may be arranged to always transmit the event trigger message to a given home automation server.

However, in many embodiments, the generator 205 may be arranged to dynamically determine a destination for the event trigger message and the network communicator 207 may be arranged to transmit the event trigger message to the determined destination, e.g. be generating one or more data packets addressed to the specific destination.

In many embodiments, the generator 205 may be arranged to select the destination device in response to a characteristic of the change in the power transfer state. Thus, in some embodiments, different changes in the power transfer state may result in an event trigger message being transmitted to different destinations depending on the change that is detected.

In some embodiments, the detector 203 may be arranged to detect a number of possible changes in the power transfer state, such as for example initiation of a new power transfer operation, termination of an ongoing power transfer operation, a switch from low power operation to high power operation, a switch from high power operation to low power operation etc. For each of these options, the generator 205 may store an address (e.g. an IP address) of a remote destination device, and it may be arranged to extract the specific address for the specific event and pass it to the network communicator 207. The network communicator 207 may then generate a data packet corresponding to the event trigger message and transmit this to the specific selected address.

In some embodiments, the generator 205 may be arranged to determine a destination device/ address in response to data received from the complementary device. Thus, in the example of the functionality for generating the event trigger message being in the power transmitter 101, the generator 205 may be arranged to determine an address for the event trigger message in response to data received from the power receiver 105.

The data may specifically be data exchanged by the first communicator 305 and the second communicator 405, i.e. it may be exchanged using the standard communication approach for communication between the power receiver 105 and the power transmitter 101.

In some embodiments, the data may be identification data for the complementary device, i.e. for the power receiver 105 in the specific example. Thus, the power receiver may transmit data to the power transmitter which includes identification data for the power receiver.

The identification data may comprise data representing an indication of the identity of the power receiver. The indication may for example be a unique device identification specific to that device or may e.g. be an indication of a type or group of devices, such as for example an indication of a device model.

The generator 205 may extract the identity information and may use this to determine the destination device/ address for the event trigger message. The generator 205 may specifically comprise a list of identities and associated addresses. The list may for example be provided to the power transmitter as a manual user input, i.e. a user may customize the operation by specifying the destination for the individual event trigger messages for the specific events that may be detected.

It will be appreciated that the approaches may be combined and e.g. the specific address may be determined in response to both the identity of the power receiver and based on the change in power transfer state which has been detected.

The approach may thus provide a flexible, and in many embodiments configurable, trigger system. For example, different remote or external events by different devices may be triggered by different actions or by using different devices.

For example, positioning a specific mobile phone with a specific identity on a power cradle comprising a power transmitter may result in a message being transmitted to an alarm system causing this to deactivate the alarm. However, if a different mobile phone with a different identity is positioned on the cradle, the alarm may not be deactivated/ de-armed but instead an event trigger message may be sent to a home automation server switching all light on and to a security camera system causing this to start recording. Thus, positioning an "unknown" mobile phone on the cradle will not switch the alarm off but will start recording and ensure that there is sufficient light for this recording as well as for the user to manually deactivate the alarm (e.g. by manually entering a security code on an alarm panel).

In such a system, removing the mobile phone from the charging cradle may cause a completely different action to be triggered. For example, detecting a termination of a power transfer operation may cause the network communicator 207 to transmit an event trigger message to remote Internet service, such as IFTTT, causing this service to e.g. send an email message to a predetermined address thereby informing the recipient that a user may e.g. be likely to leave the house.

Thus, the approach may support a wide range of different events, actions, and systems and may provide a diverse range of new options and functions.

In many embodiments, the transmission of an event trigger message to a remote source may be dependent on control data received from the complementary device meeting a criterion. For example, in the above examples, an event trigger message may only be transmitted to the alarm controller requesting this to switch off the alarm if the identity of the phone being positioned on the charging cradle matches an expected identity and otherwise no message may be transmitted (thus allowing the cradle to be used with other phones but ensuring that only the user's own phone can deactivate the alarm).

In some embodiments, the event trigger message may be adapted to include data providing information to the remote destination.

In some embodiments, the event trigger message may be generated to provide an indication of the change of the power transfer state that was detected to cause the event trigger message to be generated. For example, the event trigger message may be generated to indicate whether the cause of the message was an initiation of a power transfer, a termination of a power transfer, or a change in the power level. The device receiving the event trigger message may then adapt the operation in accordance with the specific operation. For example, a home automation server may in response to receiving such event trigger messages switch lights on when a mobile phone is placed in a cradle for charging and switch the lights off when the mobile phone is removed from the cradle.

In some embodiments where the power transfer device may receive identity data from the complementary power transfer device (e.g. the power transmitter may receive it from the power receiver), the generator 205 may be arranged to include an indication of this identity in the event trigger message. For example, in some embodiments, it may directly include the identity data from the complementary power transfer device in the event trigger message.

The approach may accordingly allow the remote device to adapt the event being triggered based on the identity of the power transfer device. Further, this can be achieved without any additional functionality, and specifically without requiring any communication link between the complementary power transfer device and the remote device.

For example, the system may allow an alarm controller to differentiate between mobile phones thereby ensuring that only an authorized mobile phone can deactivate an alarm.

In other embodiments, other elements of the control data may be used to determine a property of the event trigger message. In some embodiments, the control data received from the complementary power transfer device may for example include information about a status or characteristic of the complementary power transfer device, or of the operation thereof.

For example, for a complementary power transfer device being a power receiver, the control data may include information related to the power transfer, and the control data may specifically be indicative of a status of the power transfer.

For example, the control data may include information of a current type of load, such as e.g. whether this is a battery being charged, a motor being driven etc. As another example, the control data may be indicative of a charge level for the battery, e.g. it may reflect how long charging is expected to be before the battery is fully charged. As yet another example, the control data may be indicative of an error status. As another example, control data may be transmitted which indicates the position of the power receiver on the power transmitter, i.e. it may be indicative of the coupling between the transmitter coil 103 and the receiver coil 107.

The generator 205 may be arranged to adapt the event trigger message based on the control data received from the complementary power transfer device. In some embodiments, the event trigger message may for example be generated to directly include some or all of the control data that has been received from the complementary power transfer device.

Such an approach may allow the remote destination device receiving the event trigger message to adapt the operation based on properties or characteristics of the complementary power transfer device or the operation thereof. It may thus provide additional functionality and an improved user experience in many embodiments.

For example, a home automation controller may be arranged to switch on a light with a color that reflects how long it is expected to be before a battery charged by the power transfer operation is fully charged. As another example, if the home automation controller receives an event trigger message indicated that power transfer has initialized with an error status, it may sound an alarm to indicate this to the user etc.

In some embodiments, the generator 205 may adapt the event trigger message based on the received control data but without directly including this in the event trigger message. For example, it may concatenate or combine received control data. For example, based on the control data from the complementary device, the event trigger message may be generated with a single data bit indicating whether the power transfer is proceeding acceptably or not. The setting of this data bit may be dependent on both the power transfer level, the coupling, the time for full charge, and on whether an error condition is indicated.

In the examples above, the control data received from the complementary power transfer device is related to the power receiver itself and/or to the power transfer operation. However, in some embodiments, the control data may include data which is unrelated to the power transfer.

For example, a power receiver may include a user input allowing a user to directly provide a user input. This may be completely unrelated to the power transfer and e.g. may directly be user data for a given event or process. In this way, such a process or operation may utilize the power transfer system to support the desired operation. For example, a mobile phone may communicate control data which includes an encrypted access code (e.g. using a public key known to the mobile phone). This encrypted access code may be generated by the mobile phone without any user involvement or may e.g. be generated in response to a user input (e.g. a user inputting a pin code), face recognition, or fingerprint recognition.

The generator 205 of the corresponding power transmitter may be arranged to generate an event trigger message including this encrypted access code and transmit this to a remote alarm device when a new power transfer is initialized. The alarm device may check the access code, e.g. by decrypting this using a private code corresponding to the public code used by the power receiver and checking whether the access code is a valid one. If so, the alarm may be deactivated and otherwise it remains activated.

In some embodiments, the network communicator 207 may be arranged to transmit the event trigger message to another complementary power transfer device. Specifically, in embodiments where the described functionality for generating an event trigger message is implemented in a power transmitter, the network communicator 207 may be arranged to transmit the event trigger message to a second power receiver. The second power receiver may specifically be a power receiver which is engaged in a power transfer with the same power transmitter, typically via a second power transmitter coil, or a remote power transmitter on the same network.

As an example, a smartphone on a first power transmitter may indicate a battery status notification of a wireless earbuds being charged on a second power transmitter (possibly in another room). The wireless earbuds may possibly have no own user interface means to show battery status. Alternatively, a transmitter may select which one of multiple personal care devices on his charging plate to charge with full power, depending on the battery status of all devices and usage patterns of the devices (e.g. if the shaver is typically used in the morning only, then it may prioritize charging to the tooth brushes in the evening, if they are almost empty).

As another example, the approach may be used to locate a device. The system may keep track of the last position which can then be queried. Alternatively, the other complementary power transfer device (e.g. another mobile phone) can be triggered to make sound.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc. do not preclude a plurality. Reference signs in the claims are provided merely as a clarifying example shall not be construed as limiting the scope of the claims in any way.

## Claims

1. A power transfer device for wireless power transfer from a power transmitter (101) to a power receiver (105) using an electromagnetic power transfer signal, the power transfer device being one of the power transmitter (101) and the power receiver (105), the power transfer device comprising:
a power transfer circuit (201) comprising a power transfer coil (103, 107) for receiving or generating the power transfer signal during power transfer;
a detector (203) for detecting a change in a power transfer state for the power transfer;
a generator (205) for generating an event trigger message in response to the detection of the change in the power transfer state; and
a transmitter (207) for transmitting the event trigger message to a destination device via a network.

2. The power transfer device of claim 1 further comprising:
a communicator (305, 405) for communicating with a complementary power transfer device being the other device of the power receiver (105) and the power transmitter (101), and
wherein the communicator (305, 405) is arranged to receive an identity from the complementary power transfer device and the generator (205) is arranged to generate the event trigger message to comprise an indication of the identity of the complementary power transfer device.

3. The power transfer device of claim 1 or 2 comprising:
a communicator (305, 405) for communicating with a complementary power transfer device being the other device of the power receiver (105) and the power transmitter (101), and
wherein the communicator (305, 405) is arranged to receive an identity of the complementary power transfer device and the generator (205) is arranged to select the destination device in response to the identity of the complementary power transfer device.

4. The power transfer device of any previous claim wherein the generator (205) is arranged to select the destination device in response to a characteristic of the change in the power transfer state.

5. The power transfer device of any previous claim comprising:
a communicator (305, 405) for communicating with a complementary power transfer device being the other device of the power receiver (105) and the power transmitter (101), and
wherein the communicator (305, 405) is arranged to receive control data from the complementary device and to determine a property of the event trigger message in response to the control data.

6. The power transfer device of any previous claim comprising:
a communicator (305, 405) for communicating with a complementary power transfer device being the other device of the power receiver (105) and the power transmitter (101), and
wherein the communicator (305, 405) is arranged to receive control data from the complementary device and to include the control data in the event trigger message.

7. The power transfer device of claims 5 or 6 wherein the control data includes data unrelated to the power transfer.

8. The power transfer device of claims 5 to 7 where the control data includes status data for the complementary power transfer device.

9. The power transfer device of any previous claim wherein the change in the power transfer state includes at least one of an initiation and a termination of the power transfer.

10. The power transfer device of any previous claim wherein the change in the power transfer state includes a change in a power level of the power transfer signal.

11. The power transfer device of any previous claim wherein the network is a home automation network.

12. The power transfer device of any previous claim wherein the transmitter is arranged to transmit the message to a second complementary power transfer device.

13. The power transfer device of any of the previous claims wherein the power transfer device is the power receiver (205).

14. The power transfer device of any of the previous claims wherein the power transfer device is the power transmitter (201).

15. A method of operation for a power transfer device for wireless power transfer from a power transmitter (101) to a power receiver (105) using an electromagnetic power transfer signal, the power transfer device being one of the power transmitter (101) and the power receiver (105), the method comprising:
a power transfer circuit (201) of the power transfer device comprising a power transfer coil (103, 107) receiving or generating the power transfer signal during power transfer;
detecting a change in a power transfer state for the power transfer;
generating an event trigger message in response to the detection of the change in the power transfer state; and
transmitting the event trigger message to a destination device via a network.
